# EUROPÄISCHE PATENTANMELDUNG

(11) **EP 4 428 099 A1**
(43) Veröffentlichungstag der Anmeldung: **11.09.2024**
(21) Anmeldenummer: 23020114.7
(22) Anmeldetag: 09.03.2023
(51) Int. Cl.: C01C 1/04, C25B 1/04

(54) **VERFAHREN UND VORRICHTUNG ZUR SYNTHESE VON AMMONIAK**

(71) Anmelder: Linde GmbH, 82049 Pullach (DE)
(72) Erfinder: Schwarzhuber, Josef, 82049 Pullach (DE); Maier, Alexander, 82049 Pullach (DE); Dillig, Marius, 82049 Pullach (DE)
(74) Vertreter: Fischer, Werner

(57) **Zusammenfassung**

Die Erfindung betrifft eine Vorrichtung sowie ein Verfahren zur Synthese von Ammoniak (7), bei dem in einem Synthesekreislauf ein Wasserstoff und Stickstoff umfassendes Ammoniaksynthesegas (1) unter Zufuhr von wasserfreiem Make-up-Wasserstoff gebildet und einem Ammoniakreaktor (A) zugeleitet wird, um es mit katalytischer Unterstützung zu einem Ammoniak, Wasserstoff und Stickstoff enthaltenden Syntheseprodukt (2) umzusetzen, das in einem oder mehreren Kühlschritten (K) zur Gewinnung eines ammoniakreichen Kondensats (7) und einer weitgehend aus Wasserstoff und Stickstoff bestehenden Gasphase (6) abgekühlt wird, von der zumindest ein Teil zur Bildung des Ammoniaksynthesegases (1) über den Synthesekreislauf vor den Ammoniakreaktor (A) zurückgeführt wird, wobei eine wasserhaltige, durch elektrochemische Zerlegung von Wasser erzeugte Wasserstofffraktion (Elektrolysewasserstoff) (11) dazu bereitgestellt wird, um den wasserfreien Make-up-Wasserstoff zu erhalten. Kennzeichnen hierbei ist, dass der Elektrolysewasserstoff (11) oder eine aus dem Elektrolysewasserstoff durch Reduzierung von freiem Sauerstoff (O) erhaltene Wasserstofffraktion (12) dem abzukühlenden Syntheseprodukt (2) zugemischt wird, um Wasser abzutrennen und den wasserfreien Make-up-Wasserstoff zu erhalten.

## Beschreibung

Die Erfindung betrifft ein Verfahren zur Synthese von Ammoniak, bei dem in einem Synthesekreislauf ein Wasserstoff und Stickstoff umfassendes Ammoniaksynthesegas unter Zufuhr von wasserfreiem Make-up-Wasserstoff gebildet und einem Ammoniakreaktor zugeleitet wird, um es mit katalytischer Unterstützung zu einem Ammoniak, Wasserstoff und Stickstoff enthaltenden Syntheseprodukt umzusetzen, das in einem oder mehreren Kühlschritten zur Gewinnung eines ammoniakreichen Kondensats und einer weitgehend aus Wasserstoff und Stickstoff bestehenden Gasphase abgekühlt wird, von der zumindest ein Teil zur Bildung des Ammoniaksynthesegases über den Synthesekreislauf vor den Ammoniakreaktor zurückgeführt wird, wobei eine wasserhaltige, durch elektrochemische Zerlegung von Wasser erzeugte Wasserstofffraktion (Elektrolysewasserstoff) dazu bereitgestellt wird, um den wasserfreien Make-up-Wasserstoff zu erhalten.

Weiterhin betrifft die Erfindung eine Vorrichtung zur Durchführung des erfindungsgemäßen Verfahrens.

Ammoniak ist eine der weltweit meistproduzierten Chemikalien. Es dient in erster Linie als Grundstoff zur Herstellung von Düngemitteln, gewinnt daneben aber auch zunehmend als Energieträger und Wasserstoffspeicher an Bedeutung. In industriellem Maßstab wird es praktisch ausschließlich nach dem Haber-Bosch-Verfahren aus Stickstoff und Wasserstoff synthetisiert.

Beim Haber-Bosch-Verfahren wird ein vorwiegend aus Wasserstoff und Stickstoff bestehendes Ammoniaksynthesegas, in dem die beiden Stoffe in dem für die Synthese von Ammoniak stöchiometrischen Verhältnis von 3:1 vorliegen, mit einem Druck zwischen 80 und 300bar und einer Temperatur zwischen 150 und 250°C einem Ammoniakreaktor zugeführt, um mit katalytischer Unterstützung in einer exothermen Reaktion unter Bildung von Ammoniak umgesetzt zu werden. Aufgrund thermodynamischer Limitierungen erfolgt die Umsetzung allerdings nur unvollständig, so dass ein Syntheseprodukt entsteht, das neben Ammoniak auch erhebliche Wasserstoff- und Stickstoffanteile enthält. Mit einer Temperatur zwischen 400 und 450°C verlässt das Syntheseprodukt den Ammoniakreaktor und wird nachfolgend in einer Reihe von Wärmetauschern üblicherweise auf Temperaturen zwischen -20 und 0°C abgekühlt, um Ammoniak durch Kondensation abzuscheiden und ein zweiphasiges Stoffgemisch zu erhalten, das in einer nachfolgenden Trenneinrichtung in ein wenigstens ein weitgehend aus Wasserstoff und Stickstoff bestehendes, Reste nicht auskondensierten Ammoniaks enthaltendes Gasgemisch sowie eine überwiegend aus Ammoniak bestehende Flüssigphase getrennt wird. Während das Gasgemisch zur Erhöhung der Ammoniakausbeute ganz oder teilweise als Recyclegas zum Ammoniakreaktor zurückgeführt und in dem so etablierten Synthesekreislauf mit den Make-up-Gasen Wasserstoff und Stickstoff zum Ammoniaksynthesegas ergänzt wird, wird die überwiegend aus Ammoniak bestehende Flüssigphase üblicherweise weiter aufgereinigt, zur Vermeidung von Spannungskorrosion mit einer geringen Menge Wasser angereichert und als Ammoniakprodukt bei Atmosphärendruck und einer Temperatur von -33°C in Stahlbehältern gelagert.

Zur Gewinnung des wasserfreien Make-up-Wasserstoffs wird nach dem Stand der Technik ein kohlenwasserstoffhaltiger Einsatz, bei dem es sich etwa um Erdgas handelt, ggf. entschwefelt und anschließend beispielsweise durch Dampfreformierung, Partielle Oxidation oder Autothermalreformierung zu einem Syntheserohgas umgesetzt, das großenteils aus Wasserstoff, Kohlenmonoxid sowie Kohlendioxid besteht und daneben auch Wasser enthält. Anschließend wird das Syntheserohgas einer Wassergas-Konvertierung unterzogen, um das enthaltene Kohlenmonoxid mit Wasser zu Wasserstoff und Kohlendioxid zu konvertieren. U.a. durch Sauergaswäsche wird Kohlendioxid aus dem konvertierten Gas abgetrennt, wobei eine als Rohwasserstoff bezeichnete Wasserstofffraktion erhalten wird, die neben Wasserstoff auch Reste von Kohlenmonoxid und Kohlendioxid sowie Wasser umfasst.

Damit Kohlenmonoxid, Kohlendioxid und Wasser nicht in den Ammoniakreaktor gelangen und das dort eingesetzte, gegenüber Sauerstoffverbindungen und freiem Sauerstoff empfindliche Katalysatormaterial vergiften, ist es erforderlich, den Make-up-Wasserstoff sauerstofffrei zu erzeugen, d.h. die atomare Sauerstoffkonzentration auf weniger als 10 ppmv zu reduzieren. Der Rohwasserstoff wird hierzu beispielsweise durch Methanisierung, Stickstoffwäsche oder Druckwechseladsorption weiterbehandelt, wobei Kohlenmonoxid, Kohlendioxid und freier Sauerstoff umgewandelt oder zusammen mit evtl. vorliegendem Wasser abgetrennt werden.

Nicht zuletzt wegen der großen Mengen an klimaschädlichem Kohlendioxid, die bei dieser Art der Wasserstoffproduktion anfallen, werden verstärkt Anstrengungen unternommen, den für die Ammoniaksynthese benötigten Wasserstoff kohlendioxidarm bzw. kohlendioxidfrei zu gewinnen. Möglich ist dies etwa durch die elektrochemische Zerlegung von Wasser unter Einsatz von Strom aus regenerativen Quellen.

Bei der elektrochemischen Zerlegung von Wasser wird eine als Elektrolysewasserstoff bezeichnete Gasfraktion gewonnen, die zwar kein Kohlenmonoxid enthält, die jedoch gewöhnlich mit Wasser gesättigt ist. Außerdem enthält Elektrolysewasserstoff auch bis zu 1000ppmv freien Sauerstoff, so dass er nicht direkt als Make-up-Wasserstoff verwendet werden kann. Um aus Elektrolysewasserstoff einen zur Bildung von Ammoniaksynthesegas geeigneten Make-up-Wasserstoff zu erhalten, wird ggf. sein Gehalt an freiem Sauerstoff durch Abtrennung von Sauerstoff und/oder Umwandlung von Sauerstoff zu Wasser reduziert, ehe er beispielsweise durch Druck- oder Temperaturwechseladsorption mit hohem apparativem und energetischem Aufwand von Wasser befreit wird.

Die vorliegende Erfindung stellt sich die Aufgabe, ein Verfahren der gattungsgemäßen Art sowie eine Vorrichtung zu dessen Durchführung anzugeben, die es erlauben, den Aufwand für die Synthese von Ammoniak gegenüber dem Stand der Technik zu vermindern.

Die gestellte Aufgabe wird verfahrensseitig erfindungsgemäß dadurch gelöst, dass der Elektrolysewasserstoff oder eine aus dem Elektrolysewasserstoff durch Reduzierung von freiem Sauerstoff erhaltene Wasserstofffraktion dem abzukühlenden Syntheseprodukt zugemischt wird, um Wasser abzutrennen und den wasserfreien Make-up-Wasserstoff zu erhalten.

Bei der Reduzierung des freien Sauerstoffs wird freier Sauerstoff aus dem Elektrolysewasserstoff abgetrennt und/oder durch Reaktion mit Wasserstoff zu Wasser umgewandelt, so dass die Wasserstofffraktion mit einer atomaren Sauerstoffkonzentration von weniger als 5ppmv erhalten wird. Auf die Reduzierung des freien Sauerstoffs kann verzichtet werden, wenn der Elektrolysewasserstoff bereits mit einem Gehalt an freiem Sauerstoff von weniger als 5ppmv vorliegt.

Die Erfindung macht sich die hygroskopischen Eigenschaften des bei der Abkühlung des Syntheseprodukts kondensierenden Ammoniaks zunutze, das Wasserdampf bindet und Wasser so aus dem Synthesekreislauf ausschleust. Darüber hinaus kondensiert Wasserdampf auch wegen der tiefen, bei der Abkühlung des Syntheseprodukts erreichten Temperaturen und vermischt sich mit dem flüssigen Ammoniak. Im Unterschied zu dem im Elektrolysewasserstoff bzw. in der aus dem Elektrolysewasserstoff erhaltenen Wasserstofffraktion enthaltenen Wasserstoff, gelangt das Wasser daher nicht oder nur in einer für das eingesetzte Katalysatormaterial unkritischen Menge über den Synthesekreislauf in den Ammoniakreaktor. Auf eine Abtrennung von Wasser aus dem Elektrolysewasserstoff stromaufwärts des Synthesekreislaufs, wie sie im Stand der Technik notwendig ist, kann daher ganz oder zumindest weitgehend verzichtet werden.

Bei dem erfindungsgemäßen Verfahren wird ein Ammoniakprodukt erhalten, das einen geringen Wassergehalt aufweist, der u.U. bereits ausreichend hoch ist, um es ohne Korrosionsprobleme bei Atmosphärendruck in Stahlbehältern lagern zu können. Eine Zumischung von Wasser ist daher nicht oder nur in einem gegenüber dem Stand der Technik deutlich reduzierten Ausmaß erforderlich.

Das im Ammoniakreaktor erhaltene Syntheseprodukt wird gewöhnlich nicht in einem, sondern in mehreren seriell angeordneten Kühlschritten abgekühlt. Im ersten Kühlschritt oder den ersten Kühlschritten wird die Hochtemperaturwärme des Syntheseprodukts genutzt, um beispielsweise Dampf zu erzeugen und/oder das dem Ammoniakreaktor zugeführte Ammoniaksynthesegas vorzuwärmen, wobei das gesamte Ammoniak in der Gasphase gehalten wird. Erst in einem nachfolgenden, normalerweise mit Kühlwasser betriebenen Kühlschritt setzt die Ammoniakkondensation ein, bei der flüssiges, für die erfindungsgemäße Wasserabtrennung nutzbares Ammoniak entsteht.

Falls die Abkühlung des Syntheseprodukts einen oder mehrere Kühlschritte umfasst, in denen kein Ammoniak auskondensiert (Hochtemperaturschritte), und einen oder mehrere Kühlschritte, in denen Ammoniak auskondensiert (Kondensationsschritte), wird vorgeschlagen, den Elektrolysewasserstoff oder die aus Elektrolysewasserstoff durch Reduzierung von freiem Sauerstoff erhaltene Wasserstofffraktion stromabwärts des in Strömungsrichtung letzten Hochtemperaturschritts einzuleiten. Vorzugsweise erfolgt die Einleitung des Elektrolysewasserstoffs oder der aus Elektrolysewasserstoff durch Reduzierung von freiem Sauerstoff erhaltenen Wasserstofffraktion gleichzeitig stromaufwärts des Kondensationsschritts, in dem die Ammoniakkondensation einsetzt. Durch die Einleitung des Elektrolysewasserstoffs oder der aus Elektrolysewasserstoff durch Reduzierung von freiem Sauerstoff erhaltenen Wasserstofffraktion unmittelbar stromaufwärts des in Strömungsrichtung ersten Kondensationsschritts ist es möglich, in den Kondensationsschritten Kühlleitung einzusparen, ohne eine evtl. wirtschaftliche Nutzung von Wärme des Syntheseprodukts in den Hochtemperaturschritten zu beeinträchtigen.

Die Einleitung des Elektrolysewasserstoffs oder der aus Elektrolysewasserstoff durch Reduzierung von freiem Sauerstoff erhaltenen Wasserstofffraktion in einen anderen Kühlschritt soll nicht ausgeschlossen sein.

Das erfindungsgemäße Verfahren kann vorteilhaft dann eingesetzt werden, wenn der Elektrolysewasserstoff bzw. die aus Elektrolysewasserstoff durch Reduzierung von freiem Sauerstoff erhaltene Wasserstofffraktion mit einem hohen Wassergehalt vorliegt. Insbesondere kann der Elektrolysewasserstoff oder die aus Elektrolysewasserstoff durch Reduzierung von freiem Sauerstoff erhaltene Wasserstofffraktion mit Wasser gesättigt sein.

Zur Aufrechterhaltung der Ammoniaksynthese ist nötig, auch den über das flüssige Ammoniak aus dem Synthesekreislauf ausgetragenen Stickstoff durch Make-Up-Stickstoff zu ersetzen. Eine bevorzugte Ausgestaltung des erfindungsgemäßen Verfahrens sieht vor, dass zumindest ein Teil des als Make-up-Gas benötigten Stickstoffs gemeinsam mit dem Elektrolysewasserstoff bzw. der aus Elektrolysewasserstoff durch Reduzierung von freiem Sauerstoff erhaltenen Wasserstofffraktion dem abzukühlenden Syntheseprodukt zugemischt wird. Dies ist besonders dann vorteilhaft, wenn zur Bildung des Make-up-Stickstoffs wasserhaltiger Stickstoff zur Verfügung steht, wie er beispielsweise anfällt, wenn eine durch Druckwechseladsorption aus Luft abgetrennte Stickstofffraktion zur Entfernung von freiem Sauerstoff einer katalytischen Deoxidation unterzogen wird, bei der freier Sauerstoff zu Wasser reagiert.

Daneben soll es aber nicht ausgeschlossen sein, den Make-up-Stickstoff teilweise oder vollständig dem im Synthesekreislauf zurückgeführten Teil der weitgehend aus Wasserstoff und Stickstoff bestehende Gasphase zuzumischen.

Weiterhin betrifft die Erfindung eine Vorrichtung zur Synthese von Ammoniak, mit einem Ammoniakreaktor, der in einen Synthesekreislauf eingebunden ist, in dem unter Zuführung von Make-up-Wasserstoff ein Wasserstoff und Stickstoff umfassendes, Ammoniaksynthesegas gebildet und dem Ammoniakreaktor zugeleitet werden kann, um mit katalytischer Unterstützung zu einem Ammoniak, Wasserstoff und Stickstoff enthaltenden Syntheseprodukt umgesetzt zu werden, einer Kühleinrichtung mit einer oder mehreren seriell angeordneten Kühlstufen, die so mit einer Trenneinrichtung verbunden ist, dass das Syntheseprodukt in ein ammoniakreiches Kondensat und eine weitgehend aus Wasserstoff und Stickstoff bestehende Gasphase getrennt werden kann, von der zumindest ein Teil im Synthesekreislauf vor den Ammoniakreaktor zurückführbar ist, sowie einer mit dem Synthesekreiskauf verbundenen Wasserstoffquelle, die einen Elektrolyseur umfasst, mit dem durch elektrochemische Zerlegung von Wasser eine wasserhaltige Wasserstofffraktion (Elektrolysewasserstoff) zum Erhalt des Make-up-Wasserstoffs bereitstellbar ist.

Vorrichtungsseitig wird die gestellte Aufgabe erfindungsgemäß dadurch gelöst, dass die Wasserstoffquelle über eine Zuführeinrichtung so mit dem Synthesekreislauf verbunden ist, dass der Elektrolysewasserstoff oder eine aus Elektrolysewasserstoff durch Reduzierung von freiem Sauerstoff erhältliche Wasserstofffraktion zur Abtrennung von Wasser in die Kühleinrichtung eingeleitet werden kann, um gemeinsam mit dem Syntheseprodukt abgekühlt zu werden und den wasserfreien Make-up-Wasserstoff zu erhalten.

Die Wasserstoffquelle kann beispielsweise einen Sauren oder PEM-Elektrolyseur oder einen Alkalischen Elektrolyseur oder einen Festoxid-Elektrolyseur umfassen. Da derartige Elektrolyseure den Elektrolysewasserstoff mit einer für Make-up-Wasserstoff zu hohen Sauerstoffkonzentration erzeugen, weist die Wasserstoffquelle insbesondere in diesen Fällen eine Sauerstoffreduzierung auf, mit der der Gehalt des Elektrolysewasserstoffs an freiem Sauerstoff durch Abtrennung von Sauerstoff und/oder Umwandlung von Sauerstoff zu Wasser bis unter 5ppmv reduziert werden kann. Bei der Sauerstoffreduktion handelt es sich etwa um eine katalytische Deoxidation, mit der freier Sauerstoff über einem Katalysatorbett mit Wasserstoff zu Wasser umwandelbar ist.

Die erfindungsgemäße Vorrichtung kann mehrere Kühlstufen aufwiesen, die sich in eine Hochtemperatur- eine Kondensationsgruppe gliedern. Während in der Hochtemperaturgruppe das Syntheseprodukt ohne Ammoniakkondensation beispielsweise gegen zu verdampfendes Kesselspeisewasser abkühlbar ist, kann die Abkühlung in der Kondensationsgruppe unter Ammoniakkondensation bevorzugt gegen Kühlwasser durchgeführt werden. In einer zweckmäßigen Ausgestaltung der erfindungsgemäßen Vorrichtung mündet die Zuführeinrichtung in den Synthesekreislauf stromabwärts der Hochtemperaturgruppe und stromaufwärts der Kondensationsgruppe.

Zweckmäßigerweise ist die Zuführeinrichtung mit einer Mischeinrichtung verbunden, mit der dem Elektrolysewasserstoff bzw. der aus Elektrolysewasserstoff durch Reduzierung von freiem Sauerstoff erhältlichen Wasserstofffraktion zumindest ein Teil des im Synthesekreislauf benötigten Make-up-Stickstoffs zugemischt werden kann.

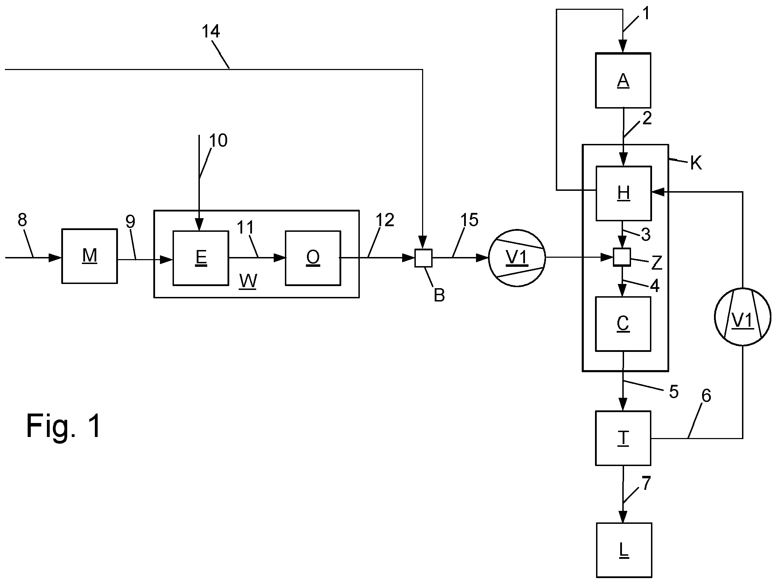

Im Folgenden soll die Erfindung anhand eines in der Figur 1 schematisch dargestellten Ausführungsbeispiels näher erläutert werden.

Die Figur 1 zeigt eine Ammoniaksynthese, die gemäß einer bevorzugten Variante des erfindungsgemäßen Verfahrens betrieben wird.

Das Ammoniaksynthesegas 1, in dem Wasserstoff und Stickstoff in dem für die Synthese von Ammoniak stöchiometrischen Verhältnis von 3:1 vorliegen, wird wasserfrei und mit einer Temperatur zwischen 150 und 250°C dem Ammoniakreaktor A zugeführt, wo es mit katalytischer Unterstützung in einer exothermen Reaktion bei einem Druck zwischen 80 und 300 bar unter Bildung von Ammoniak zum Syntheseprodukt 2 umgesetzt wird, das neben Ammoniak auch erhebliche Wasserstoff- und Stickstoffanteile enthält. Dem Syntheseprodukt 2, das den Ammoniakreaktor A mit einer Temperatur zwischen 400 und 480°C verlässt, wird zunächst in der Hochtemperaturgruppe H der Kühleinrichtung K Hochtemperaturwärme entzogen, die beispielsweise zur Erzeugung von Prozessdampf genutzt wird. Dabei entsteht ein abgekühltes Syntheseprodukt 3, in dem der größte Teil des Ammoniaks in der Gasphase vorliegt. Über die Zuführeinrichtung Z und Leitung 4 wird das abgekühlte Syntheseprodukt in die Kondensationsgruppe C der Kühleinrichtung K weitergeleitet, um seine Temperatur auf einen Wert zwischen -20 und 0°C abzusenken, wobei Ammoniak auskondensiert und ein zweiphasiges Stoffgemisch 5 entsteht, das in der Trenneinrichtung T in ein weitgehend aus Wasserstoff und Stickstoff bestehendes, Reste nicht auskondensierten Ammoniaks enthaltendes Gasgemisch 6 und eine überwiegend aus Ammoniak bestehende Flüssigphase 7 getrennt wird. Während die Flüssigphase 7 als Ammoniakprodukt in den Lagerbehälter L eingeleitet wird, wird das Gasgemisch 6 über den RecycleverdichterV1 zurückgeführt und nach Anwärmung gegen das abzukühlende Syntheseprodukt 2 über Leitung 1 dem Ammoniakreaktor A aufgegeben.

Zur Erzeugung von Make-up-Wasserstoff wird der Wasseraufbereitung M über Leitung 8 Wasser zugeführt, um zu demineralisiertem Wasser 9 aufbereitet und in den in der Wasserstoffquelle W angeordneten Elektrolyseur E weitergeleitet zu werden. Hier wird das demineralisierte Wasser 9 mit Hilfe von elektrischem Strom 10, der vorzugsweise aus einer regenerativen Stromquelle stammt, zerlegt, wobei Elektrolysewasserstoff 11 entsteht, der typischerweise mit Wasser gesättigt ist und bis zu 1000 ppmv freien Sauerstoff enthält. In der Sauerstoffreduzierung O, bei der es sich etwa um eine katalytische Deoxidation handelt, wird der Gehalt an freiem Sauerstoff des Elektrolysewasserstoffs 11 auf einen Wert unterhalb von 5ppmv reduziert, wodurch eine mit Wasser gesättigte Wasserstofffraktion 12 entsteht, die aus der Wasserstoffquelle W abgezogen wird.

Mit einem Stickstoffstrom 14 wird die Wasserstofffraktion 12 in der Mischeinrichtung B zum Make-up-Gas 15 gemischt, dessen Druck im Verdichter V2 erhöht wird, um es über die Zuführeinrichtung Z dem abgekühlten Syntheseprodukt 3 zuzumischen, mit dem gemeinsam es über Leitung 4 zur Abkühlung in die Kondensationsgruppe C geführt wird. Während das im Make-up-Gas 15 enthaltene Wasser mit dem Ammoniak des Syntheseprodukts 3 auskondensiert und mit dem Ammoniakprodukt 7 in den Lagerbehälter L eingeleitet wird, gelangen Stickstoff und Wasserstoff als wasserfreie Make-up-Gase in das Ammoniaksynthesegas 1.

## Patentansprüche

1. Verfahren zur Synthese von Ammoniak (7), bei dem in einem Synthesekreislauf ein Wasserstoff und Stickstoff umfassendes Ammoniaksynthesegas (1) unter Zufuhr von wasserfreiem Make-up-Wasserstoff gebildet und einem Ammoniakreaktor (A) zugeleitet wird, um es mit katalytischer Unterstützung zu einem Ammoniak, Wasserstoff und Stickstoff enthaltenden Syntheseprodukt (2) umzusetzen, das in einem oder mehreren Kühlschritten (K) zur Gewinnung eines ammoniakreichen Kondensats (7) und einer weitgehend aus Wasserstoff und Stickstoff bestehenden Gasphase (6) abgekühlt wird, von der zumindest ein Teil zur Bildung des Ammoniaksynthesegases (1) über den Synthesekreislauf vor den Ammoniakreaktor (A) zurückgeführt wird, wobei eine wasserhaltige, durch elektrochemische Zerlegung von Wasser erzeugte Wasserstofffraktion (Elektrolysewasserstoff) (11) dazu bereitgestellt wird, um den wasserfreien Make-up-Wasserstoff zu erhalten, **dadurch gekennzeichnet, dass** der Elektrolysewasserstoff (11) oder eine aus dem Elektrolysewasserstoff (11) durch Reduzierung von freiem Sauerstoff (O) erhaltene Wasserstofffraktion (12) dem abzukühlenden Syntheseprodukt (2) zugemischt wird, um Wasser abzutrennen und den wasserfreien Make-up-Wasserstoff zu erhalten.

2. Verfahren nach Anspruch 1, **dadurch gekennzeichnet, dass** der Elektrolysewasserstoff (11) oder die aus dem Elektrolysewasserstoff (11) durch Reduzierung von freiem Sauerstoff (O) erhaltene Wasserstofffraktion (12) dem Syntheseprodukt (3) unmittelbar stromaufwärts eines Kühlschritts (C) zugemischt wird, in dem die Ammoniakkondensation einsetzt.

3. Verfahren nach einem der Ansprüche 1 oder 2, dass das der Elektrolysewasserstoff (11) oder die aus dem Elektrolysewasserstoff (11) durch Reduzierung von freiem Sauerstoff (O) erhaltene Wasserstofffraktion (12) mit Wasser gesättigt ist.

4. Verfahren nach einem der Ansprüche 1 bis 3, **dadurch gekennzeichnet, dass** für die Bildung des Ammoniaksynthesegases (1) benötigter Stickstoff (14) gemeinsam mit dem Elektrolysewasserstoff (11) bzw. der aus dem Elektrolysewasserstoff (11) durch Reduzierung von freiem Sauerstoff (O) erhaltenen Wasserstofffraktion (12) dem abzukühlenden Syntheseprodukt (2) zugemischt wird.

5. Verfahren nach einem der Ansprüche 1 bis 4, **dadurch gekennzeichnet, dass** für die Bildung des Ammoniaksynthesegases (1) benötigter Stickstoff dem im Synthesekreislauf zurückgeführten Teil (6) der weitgehend aus Wasserstoff und Stickstoff bestehende Gasphase zugemischt wird.

6. Vorrichtung zur Synthese von Ammoniak (7), mit einem Ammoniakreaktor (A), der in einen Synthesekreislauf eingebunden ist, in dem unter Zuführung von Make-up-Wasserstoff ein Wasserstoff und Stickstoff umfassendes, Ammoniaksynthesegas (1) gebildet und dem Ammoniakreaktor (A) zugeleitet werden kann, um mit katalytischer Unterstützung zu einem Ammoniak, Wasserstoff und Stickstoff enthaltenden Syntheseprodukt (2) umgesetzt zu werden, einer Kühleinrichtung (K) mit einer oder mehreren seriell angeordneten Kühlstufen, die so mit einer Trenneinrichtung (T) verbunden ist, dass das Syntheseprodukt (2) in ein ammoniakreiches Kondensat (7) und eine weitgehend aus Wasserstoff und Stickstoff bestehende Gasphase (6) getrennt werden kann, von der zumindest ein Teil im Synthesekreislauf vor den Ammoniakreaktor (A) zurückführbar ist, sowie einer mit dem Synthesekreiskauf verbundenen Wasserstoffquelle (W), die einen Elektrolyseur (E) umfasst, mit dem durch elektrochemische Zerlegung von Wasser eine wasserhaltige Wasserstofffraktion (Elektrolysewasserstoff) (11) zum Erhalt des Make-up-Wasserstoffs bereitstellbar ist, **dadurch gekennzeichnet, dass** die Wasserstoffquelle (W) über eine Zuführeinrichtung so mit dem Synthesekreislauf verbunden ist, dass der Elektrolysewasserstoff (11) oder eine aus Elektrolysewasserstoff (11) durch Reduzierung von freiem Sauerstoff erhältliche Wasserstofffraktion (12) zur Abtrennung von Wasser in die Kühleinrichtung (K) eingeleitet werden kann, um gemeinsam mit dem Syntheseprodukt (2) abgekühlt zu werden und den wasserfreien Make-up-Wasserstoff zu erhalten.

7. Vorrichtung nach Anspruch 6, **dadurch gekennzeichnet, dass** die Wasserstoffquelle (W) eine Sauerstoffreduzierung (O) aufweist, mit der Sauerstoff aus Elektrolysewasserstoff (11) abgetrennt werden kann, um den Make-up-Wasserstoff mit einem Sauerstoffgehalt von weniger als 5ppmv zu erhalten.

8. Vorrichtung nach einem der Ansprüche 6 oder 7, **dadurch gekennzeichnet, dass** die Zuführeinrichtung (Z) in den Synthesekreislauf unmittelbar stromabwärts der Kühlstufe (C) einmündet, in der die Ammoniakkondensation einsetzt.

9. Vorrichtung nach einem der Ansprüche 6 bis 8, **dadurch gekennzeichnet, dass** der Elektrolyseur (E) als PEM-Elektrolyseur oder als Alkalischer Elektrolyseur oder als Festoxid-Elektrolyseur ausgeführt ist.

10. Vorrichtung nach einem der Ansprüche 6 bis 9, **dadurch gekennzeichnet, dass** die Zuführeinrichtung (Z) mit einer Mischeinrichtung (B) verbunden ist, mit der dem Elektrolysewasserstoff (11) oder der aus Elektrolysewasserstoff (11) durch Reduzierung von freiem Sauerstoff erhältlichen Wasserstofffraktion (12) Stickstoff (14) zugemischt werden kann.
